# EUROPEAN PATENT SPECIFICATION

(11) **EP 3 041 083 B1**
(45) Date of publication and mention of the grant of the patent: **27.05.2020**
(21) Application number: 15002777.9
(22) Date of filing: 28.09.2015
(51) Int. Cl.: H01Q 1/24, H01Q 1/42, H01Q 1/48, H01Q 7/00, H01Q 9/42, H01Q 5/364

(54) **ANTENNA MODULE AND MOBILE TERMINAL HAVING THE SAME**
ANTENNENMODUL UND TRAGBARES ENDGERÄT DAMIT
MODULE D'ANTENNE ET TERMINAL MOBILE DOTÉ DE CELUI-CI

(30) Priority: 05.01.2015 KR 20150000772
(43) Date of publication of application: 06.07.2016
(73) Proprietor: LG Electronics Inc., Seoul 07336 (KR)
(72) Inventor: Choi, Jaehyun, 06772 Seoul (KR); Choi, Hyengcheul, 06772 Seoul (KR); You, Chisang, 06772 Seoul (KR)
(74) Representative: Katérle, Axel

(56) References cited:
- EP-A1- 2 562 870
- EP-A2- 2 500 979
- WO-A1-2014/199862
- WO-A1-2014/203976
- US-A1- 2012 268 328

## Description

### BACKGROUND OF THE INVENTION

### 1. Field of the Invention

The present invention relates to an antenna module using a cover of a mobile terminal and a mobile terminal having the same.

### 2. Description of the Conventional Art

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Various attempts have been made to implement complicated functions in such a multimedia device by means of hardware or software.

Recently, there has been a great interest in an antenna module using a cover of the mobile terminal. However, since a slit or a slot is formed on the cover forming an external appearance of the mobile terminal, an external design of the mobile terminal is deteriorated, thus requiring an improvement thereof.

EP 2 500 979 A2 discloses a mobile terminal including a main body having a ground, a first conductor installed in the main body and connected with the ground so as to be power-fed, and a second conductor facing the first conductor.

WO 2014/199862 A1 discloses antenna device provided with two conducting surfaces laid out so as to face each other with a space there between; a first connecting conductor that connects said conducting surfaces to each other in a DC manner in one location; and an antenna coil laid out so as to be adjacent to said first connecting conductor.

US 2012/0268328 A1 discloses an antenna device for improving antenna performance of a portable terminal having a metal edge installed on a case frame is disclosed.

EP 2 562 870 A1 discloses a multiband antenna apparatus for use in a portable radio communications device, the antenna apparatus comprising: a first antenna structure comprising a radiator means configured to be disposed substantially around an outside perimeter of a device enclosure.

WO 2014/203976 A1 discloses an antenna and a wireless device provided therewith, said antenna being provided with the following: a ground plane; a sheet conductor; a feed element; and a linear radiating element.

### SUMMARY OF THE INVENTION

It is an object of the present invention to provide an antenna module and a mobile terminal having the same, which implements a resonance frequency of a multi-bandwidth.

To achieve this, there is provided an antenna module in accordance with claim 1. The antenna module includes a ground plate; a metal plate spaced apart from the ground plate by a distance such that a surface of the metal plate faces a surface of the ground plate; a first conductive member spaced apart from an edge of the ground plate by a distance, the first conductive member encompassing the edge; a feeding part formed on the ground plate; a second conductive member formed on the ground plate and electrically coupled to the feeding part, wherein the second conductive member electromagnetically feeds the first conductive member and the metal plate; and a first connection member and a second connection member that electrically couple the ground plate to the metal plate.

The positions, where the first connection member and the second connection member are formed are at end portions of the first conductive member of the first conductive member.

The antenna module further includes a third conductive member formed on the metal plate and spaced apart from the second conductive member by a distance, and the third conductive member is fed by the second conductive member.

The second conductive member and the third conductive member are electrically coupled by a third connection member.

In one embodiment, the antenna module may further include a fourth conductive member and a fifth conductive member, each having a first end connected to the feeding part and a second end connected to the metal plate.

In one embodiment, the antenna module may further include a first switch and a second switch that are configured to selectively operate a fourth connection member and a fifth connection member to connect the first conductive member to the metal plate.

In one embodiment, the fourth connection member and the fifth connection member may be provided at an inner side of a region of the first connection member where the first connection member and the second connection member are connected with the first conductive member.

In one embodiment, the first conductive member may have a "C" shape.

In one embodiment, the ground plate may be a printed circuit board.

In one embodiment, the first conductive member may be formed on an extension part of the printed circuit board.

In one embodiment, the first conductive member may be formed on a carrier having a dielectric constant, or formed at an outside of an insulation part formed on an edge of the ground plate.

In one embodiment, the first conductive member may be one of a conductive line, a pogo pin, a c-clip, or an electromagnetic interference (EMI) sheet.

The present invention further provides a mobile terminal as defined in claim 9. The terminal includes a terminal body; and an antenna module provided within the terminal body and comprising: a ground plate; a metal plate spaced apart from the ground plate by a distance such that a surface of the metal plate faces a surface of the ground plate; a first conductive member spaced apart from an edge of the ground plate by a distance, the first conductive member encompassing the edge; a feeding part provided on the ground plate; a second conductive member formed on the ground plate and coupled to the feeding part, wherein the second conductive member indirectly feeds the first conductive member and the metal plate; and a first connection member and a second connection member that couple the ground plate to the metal plate.

In one embodiment, the metal plate may be a rear cover covering the terminal body.

The mobile terminal further includes a third conductive member formed on the metal plate and spaced apart from the second conductive member by a distance, wherein the third conductive member is indirectly fed by the second conductive member.

In one embodiment, the mobile terminal may further include a fourth conductive member and a fifth conductive member, each having a first end connected to the feeding part and a second end connected to the metal plate, wherein the fourth conductive member and the fifth conductive member may be formed at an inner side of a side surface of the terminal body.

In one embodiment, the mobile terminal may further include a first switch and a second switch that are configured to selectively operate a fourth connection member and a fifth connection member to connect the first conductive member to the metal plate.

In one embodiment, the ground plate may be a printed circuit board or an intermediate frame provided within the terminal body.

According to an embodiment of the present invention, there are provided the following effects and advantages.

That is, according to at least one embodiment of the present invention, it is possible to fabricate an antenna module without forming slots on a cover of the mobile terminal.

Further, according to at least one embodiment of the present invention, it is possible to prevent an external design of the mobile terminal from deteriorating by forming no slots on the cover that forms an external appearance of the mobile terminal.

### BRIEF DESCRIPTION OF THE DRAWING

The present invention will become more fully understood from the detailed description given hereinbelow and accompanying drawings, which are given by illustration only, and thus are not limitative of the present invention, and wherein:
FIG. 1A is a block diagram illustrating a schematic configuration of a mobile terminal according to an embodiment of the present invention;
FIGS. 1B and 1C are schematic views illustrating a mobile terminal according to an embodiment of the present invention, which are viewed from different directions;
FIG. 2 is a disassembled perspective view illustrating a mobile terminal according to an embodiment of the present invention;
FIG. 3 is a view schematically illustrating a configuration of an antenna module according to an example;
FIG. 4 is a view illustrating a current flow in FIG. 3;
FIG. 5 is a view schematically illustrating a configuration of the antenna module to which a third connection member is further added, according to an embodiment of the present invention;
FIG. 6 is a view schematically illustrating a configuration an antenna module to which fourth and fifth conductive members are further added; and
FIG. 7 is a view schematically illustrating a configuration of an antenna module to which first and second switches are added.

### DETAILED DESCRIPTION OF THE PREFERRED EMBODIMENTS

Description will now be given in detail according to exemplary embodiments and examples disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

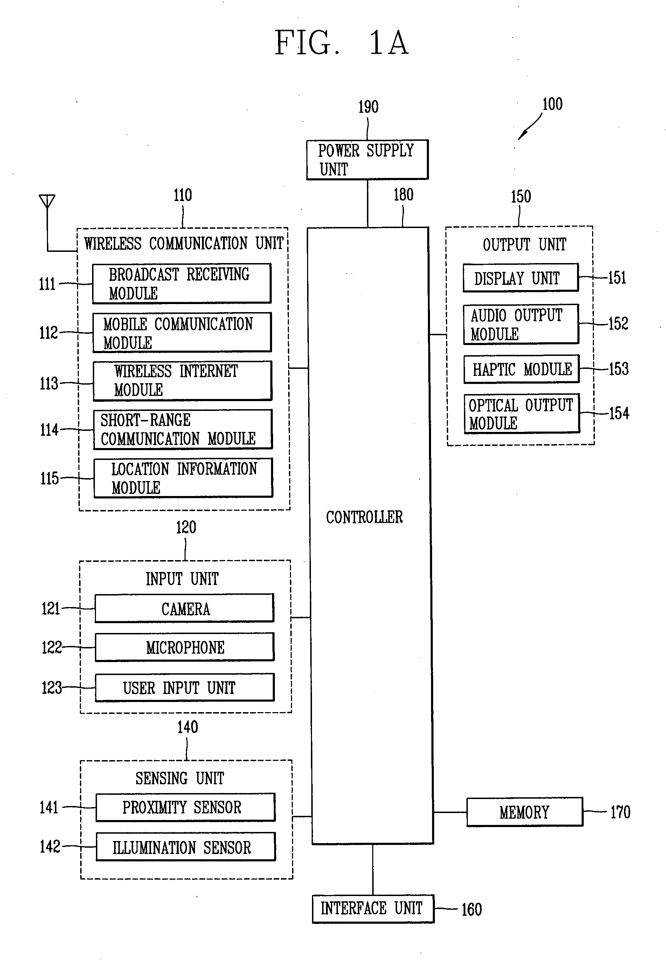

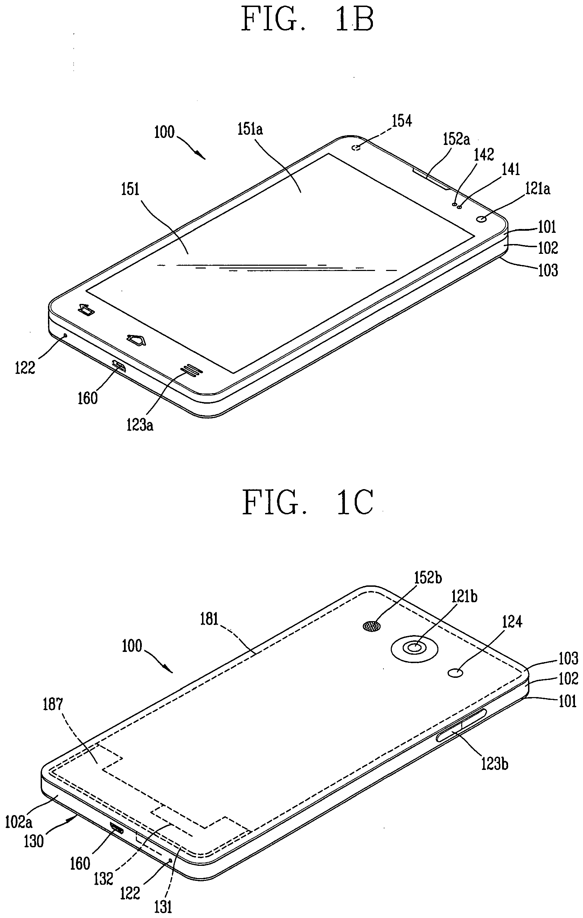

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the above components may operate in a cooperating manner, so as to implement an operation or a control method for a glass type terminal according to various embodiments to be explained later. The operation or the control method for the glass type terminal may be implemented on the glass type terminal by driving at least one application program stored in the memory 170.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (Ul) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

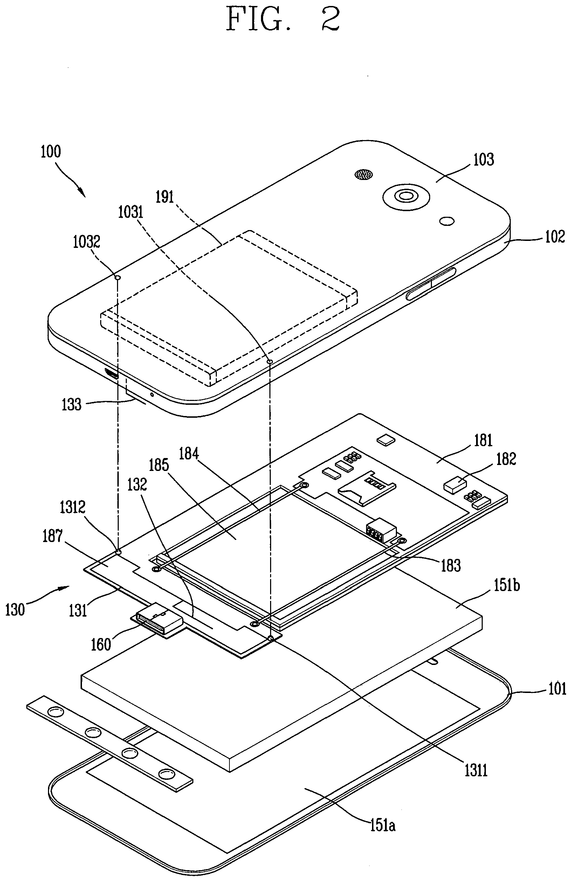

FIG. 2 is a disassembled perspective view of a mobile terminal according to an embodiment of the present invention.

Referring to FIG. 2, there is shown an antenna module 130 formed on a rear cover 103 between a printed circuit board 181 which is a ground plate and a terminal body.

The mobile terminal 100 includes a window 151a and a display module 151b that constitute a display unit 151. The window 151a may be coupled to one side of a front case 101.

A frame 185 is provided between the front case 101 and the rear case 102 to support electric components thereon. The frame 185 is a kind of support structure within the mobile terminal, and may be fabricated to support, for instance, at least one of the display module 151b, the camera module 121b, the antenna module 130, the battery 191, or the printed circuit board 181.

Part of the frame 185 may be exposed to the terminal body. Further, the frame 185 may constitute part of a sliding module that connects the body and the display unit to each other in a slide-type terminal, not in a bar-type terminal.

FIG. 2 shows an example in which the frame 185 is disposed between the rear case 102 and the printed circuit board 181, and the display module 151b is coupled to one side surface of the printed circuit board 181. The rear cover 103 may be coupled to the rear case 102 so as to cover the battery 191. In this instance, the frame 185 is a component to reinforce the mobile terminal.

The window 151a is coupled to one side surface of the front case 101. A touch sensor (not shown) may be mounted to the window 151a. The touch sensor may be formed to sense a touch input, and has a light transmittance. The touch sensor may be mounted on a front surface of the window 151a, and fabricated to convert a change such as a voltage change generated at a specific portion of the window 151a into an electric input signal.

The display module 151b is mounted on a rear surface of the window 151a. In this embodiment, as an example of the display module 151b, a thin film transistor-liquid crystal display (TFT-LCD) is shown, but not limited thereto.

For instance, the display module 151b may include a liquid crystal display (LCD), an organic light-emitting diode (OLED), a flexible display, or a 3D display.

The printed circuit board 181 may be mounted to a lower portion of the display module 151b. And at least one electronic component may be mounted on a lower surface of the printed circuit board 181.

An accommodation portion in a recessed form may be provided on the frame 185, in which the battery 191 may be accommodated. Further, a contact terminal connected to the circuit board 181, for supplying a power to the terminal body by the battery 191, may be formed at the rear case 102 or one side surface of the frame 185.

An antenna module may be formed at an upper end or a lower end of the mobile terminal.

Generally, at an upper end of the mobile terminal, an LTE/WCDMA Rx Only antenna, a GPS antenna, a BT/WiFi antenna, and the like are provided, and a main antenna is formed at a lower end of the mobile terminal.

An embodiment of the present invention mainly relates to a main antenna, but not limited thereto and may receive at least one frequency band among the LTE/WCDMA Rx Only antenna, the GPS antenna, and the BT/WiFi antenna.

Further, the antenna module is formed in plural and disposed at each end of the mobile terminal, and also may be formed to receive radio signals of different frequency bands.

The frame 185 may be formed of a metallic material so as to have a sufficient strength despite a small thickness. The frame 185 formed of a metallic material may be operated as a ground. That is, the circuit board 181 or the antenna module 130 may be grounded to the frame 185, such that the frame 185 may be operated as a ground of the circuit board 130 or the antenna module 130. In this instance, the frame 185 may extend a ground of the mobile terminal.

When the circuit board 181 occupies a majority of the terminal body without providing the frame 185, it is possible to extend the ground by the circuit board 181 by itself.

The circuit board 181 is electrically connected with the antenna module 130 to process radio signals (or radio electromagnetic waves) received and transmitted by the antenna module 130. To process the radio signals, a plurality of transmission/reception circuits 182 may be mounted or formed on the circuit board 181.

The transmission/reception circuits may include more than one integrated circuit and related electrical devices. As an example, the transmission/reception circuit may include a transmission integrated circuit, a reception integrated circuit, a switching circuit, an amplifier, and the like.

The plurality of transmission/reception circuits simultaneously supply an electric power to the conductive members which are radiators, so that the plurality of antenna modules may be simultaneously operated. For instance, while one transmits, another may receive, or both of them may transmit or receive simultaneously.

The transmission/reception circuits may be constituted in plural, and each of the transmission/reception circuit may be embodied in the form of a communication chip which includes at least one of a CP (Call Processor), a Modem chip, an RF transceiver chip, and an RF receiver chip. Thus, each communication chip supplies an electric power to the conductive members through an electric power supply unit and a matching module (including a variable switch) to transmit radio signals, or may execute a predetermined process such as a frequency conversion process or a demodulation process by receiving radio signals received by the conductive members through a matching module (including variable switches) and a feeding portion.

Coaxial cables 183 and 184 are configured to connect the circuit board 181 and the antenna module 130 to each other. As an example, the coaxial cables 183 and 184 may be connected to a feeding device that supplies an electric power to the antenna module 130.

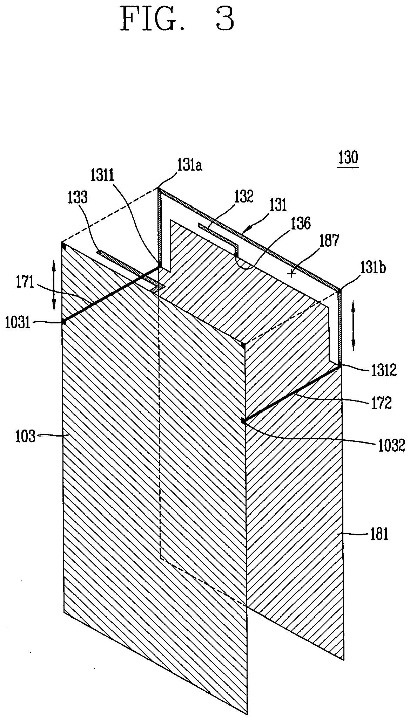

FIG. 3 is a disassembled perspective view schematically illustrating a configuration of the antenna module 130 according to an example, in which a metal plate 103 is coupled to a ground plate 181.

Referring to FIG. 3, the antenna module includes a ground plate 181, and a metal plate 103 disposed to face the ground plate 181 and spaced from the ground plate 181 by a predetermined distance. Here, the metal plate 103 may be a rear cover of the mobile terminal, and the ground plate 181 may be a circuit board or a frame provided within the terminal body. For instance, the ground plate 181 may be an intermediate frame 185 disposed between the front case 101 and the rear case 102 (refer to FIG. 2).

In one embodiment of the present invention, a technique to utilize the metal plate 103 as part of the antenna is presented. In this embodiment, the ground plate 181 is not necessarily formed in the same shape as the metal plate 103, but may be formed in a rectangular shape, as shown in FIG. 3, while the ground plate 181 is smaller than the metal plate 103 with its upper end portions cut-out. That is, the printed circuit board has a substantially "C" shaped insulation member 187 thereon. The insulation member 187 is formed to cover part of an edge portion of the printed circuit board, and the first conductive member 131 is formed at an extension part of the ground plate 181.

Here, the first conductive member 131, which covers the insulation member 187 and formed to be spaced apart from an edge of the ground plate 181 with a predetermined gap, is connected to the metal plate 103 to form the antenna module 130. The metal plate 103 and the ground plate 181 are connected to each other by a first connection member 171 and a second connection member 172 which are provided at both ends of the metal plate 103. The first conductive member 131 is formed of a metal pattern, and may be, for instance, a micro-strip. This may be applied to other conductive members 132, 133 and 134 which will be referred to hereinbelow.

The first and second connection members 171 and 172 may be formed by a conductive line, but may be a pogo pin, a C-clip or an EMI sheet, since the first and second conductive members 171 and 172 are used to electrically connect the metal plate 103 and the first conductive member 131 to each other.

The first conductive member 131 is formed to be adjacent to an end of the ground plate 181, and may be connected to the ground plate 181 at its both ends. The first conductive member 131 may form part of a side decoration of the mobile terminal. Further, the printed circuit board is formed by a plurality of layers including insulation layers, and the first conductive member 131 may be formed on the insulation layer.

Further, the first conductive member 131 may be formed as a conductive pattern which is printed on one surface of a carrier (not shown). The carrier, a dielectric having a predetermined dielectric constant, may be formed of FR-3 composed of a plurality of sheets of paper which are impregnated with an epoxy resin binder, and CEM-1 which is a composite material having a paper core impregnated with an epoxy resin. Further, the carrier may include CEM-3 of which surface is impregnated with an epoxy resin on a woven glass fiber and of which core is impregnated with an epoxy resin on a non-woven glass fiber, FR-4 laminated with a plurality of glass fibers impregnated with an epoxy resin, FR-5 laminated with a plurality of glass fibers impregnated with a multi-functional epoxy resin, Gl fabricated with a plurality of woven glass fibers impregnated with a polyimide resin, and a material of part of a printed circuit board.

In order to operate the antenna module 130, an electric power must be applied to the first conductive member 131 and the metal plate 103. For this purpose, in an embodiment of the present invention, an electric power is applied to the first conductive member 131 and the metal plate 103 through the feeding part 136 and the second conductive member 132 formed on the ground plate 181.

As for the feeding, a direct feeding may be applied, but in one embodiment of the present invention, an indirect feeding is applied. The indirect feeding according to an embodiment of the present invention is a method to indirectly supply an electric power, and imply a method to feed an electric current by an electromagnetic method which includes both an electric coupling and a magnetic coupling. According to such an indirect feeding method, it is possible to more stably feed an electric current to the first conductive member 131 and the metal plate 103.

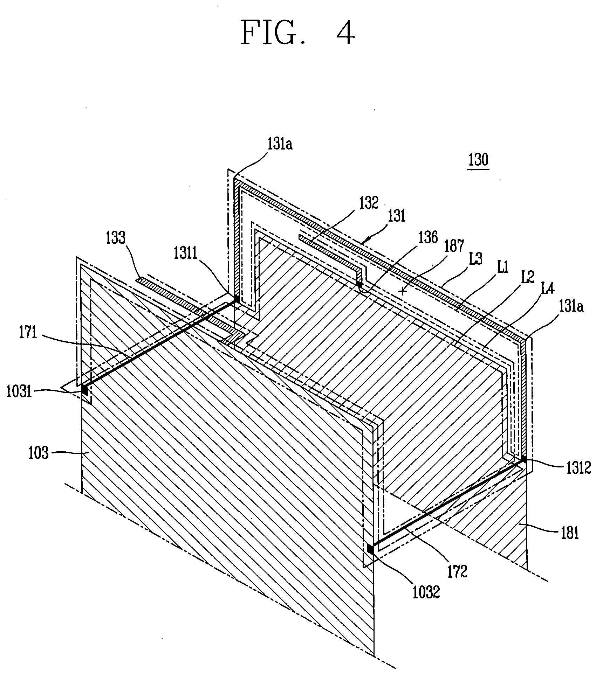

According to FIGS. 3 and 4, an indirect feeding method by the second conductive member 132 is applied, and the second conductive member 132 may be formed of a conductive material, for instance, a wire or a patch (micro-strip). When the second conductive member 132 is a patch, the second conductive member 132 may be an inverted L-type antenna (ILA) or a planar inverted F-type antenna (PIFA).

As described above, the second conductive member 132 is connected to the feeding part 136 to indirectly supply an electric power to the first conductive member 131 and the metal plate 103, and disposed between the first conductive member 131 and the metal plate 103 with a predetermined distance from the first conductive member 131. Here, the first connection member 171 and the second connection member 172 for connecting the ground plate 181 and the metal plate 103 to each other are further provided to form a current path.

As described above, since the insulation member 187 has a "C" shape, the first conductive member 131 which is disposed outside the insulation member 187 is formed in the same shape as the insulation member 187.

As shown in FIG. 3, the first conductive member 131 is bent at two middle portions 131a and 131b, and the outer parts of the first conductive member 131 and the ground plate 181 which is extended from the first conductive member 131 may have a shape corresponding to that of the metal plate 103.

The first and second connection members 171 and 172 may be variably formed between the end of the first conductive member 131 and an intermediate portion of the first conductive member 131 in order to obtain a bandwidth or to perform an impedance matching.

The first conductive member 131 includes a first contact terminal 1311 and a second contact terminal 1312, and the metal plate 103 includes a first connection terminal 1031 and a second connection terminal 1032 to correspond to the first and second contact terminals 1311 and 1312, respectively, so that the first connection member 171 and the second connection member 172 may connect the first conductive member 131 and the metal plate 103 to each other. Though in FIGS. 3 and 4, there are shown the ground plate 181 and the metal plate 103 in an exaggerated manner to help understanding of a gap therebetween, the ground plate 181 and the metal plate 103 may be connected to each other by a pogo pin or a C-clip. In this instance, in a case where the first connection member 171 and the second connection member 172 are conductive lines, the first contact terminal 1311, the second contact terminal 1312, the first connection terminal 1031 and the second connection terminal 1032 may be conductive pads.

FIG. 4 is a view illustrating a current flow in FIG. 3.

Referring to FIG. 4, when the first conductive member 131 and the metal plate 103 are indirectly fed by the second conductive member 132, various current flows may be generated. In an embodiment of the present invention, a resonance frequency is embodied using such a current flow.

Hereinbelow, will be described conductive loops embodying a resonance frequency.

First, a first loop (L1) is formed on a plane of the ground plate 181 by the first conductive member 131 and an edge of the ground plate 181. That is, a current generated along an edge of the insulation member 187 is referred to as the first loop (L1).

And a second loop (L2) is formed by the ground plate 181, the first connection member 171, the second connection member 172 and the metal plate 103. That is, the second loop (L2) is formed along part of an edge of the metal plate 103, a portion where the metal plate 103 is connected to the first connection member 171 and the second connection member 172, and an edge of the ground plate 181.

Further, a third loop (L3) is formed by the first conductive member 131, the first connection member 171, the second connection member 172, and part of the metal plate 103. That is, the third loop (L3) is formed by the first conductive member 131, part of an edge of the metal plate 103, and the first and second connection members 171 and 172 which connect both ends of the first conductive member 131 and the metal plate 103. The third loop (L3) takes a similar path to the second loop (L2), but forms a longer path than the second loop (L2).

A plurality of loops may be formed besides the first through third loops, but as they are not within a range of a frequency band of an antenna of the mobile terminal, further description will be omitted for the clarity purposes. And it is possible to embody a resonance frequency of multiband via the first through third loops (L1, L2 and L3).

It is possible to form a folded dipole by overlapping the first through third loops (L1-L3) at a predetermined portion. That is, the loops (L1 or L3) formed on the first conductive member 131, the loop (L2) formed on an edge of the ground plate 181, and the loop (L2 or L3) formed on the metal plate 103 are formed to be adjacent to each other in a similar shape. Here, the loops are formed in a substantially "C" shape, and the first conductive member 131, the ground plate 181 and the metal plate 103 may be operated as a radiator of a folded dipole antenna.

Such a folded dipole antenna has input impedance which is proportional to a square of a turn number compared to a half-wavelength dipole antenna. Thus, when the turn number is three, the input impedance is increased nine times. For this reason, a radiation power and a radiation resistance may be increased compared to a general half-wavelength dipole antenna. As it is easy to match with a feeder having large characteristic impedance, a broadband characteristic may be embodied and efficiency of an antenna may be enhanced.

In FIGS. 3 and 4, the first conductive member 131 is shown in a "C" shape, but not limited thereto, and may be formed to be spaced apart from an edge of the ground plate 181 with a predetermined distance. For instance, in a case where the antenna module 130 is applied to a tablet, since it is possible to secure a sufficient length of an antenna required for a resonance frequency of a low frequency band, the first conductive member 131 may be formed to be straight.

Further, as shown in FIGS. 3 and 4, a third conductive member 133, which is formed on the metal plate 103 and disposed spaced apart from the second conductive member 132 with a predetermined distance so as to be indirectly fed, may be further provided to secure a resonance frequency at various bands. The third conductive member 133 is formed on the metal plate 103 and disposed between the metal plate 103 and the ground plate 181. The third conductive plate 133 is not necessarily formed at an end of the metal plate 103, but preferably be formed along an edge of the metal plate 103, since most of current flows along the end of the metal plate 103.

As shown in FIG. 4, by adding the third conductive member 133, a fourth loop (L4) is formed along the second conductive member 132, part of the ground plate 181, the second connection member 172, part of an edge of the metal plate 103, and the third conductive member 133. A dipole antenna is formed by the fourth loop (L4), and is preferably disposed to be adjacent to the second conductive member 132 and the third conductive member 133 for coupling therebetween.

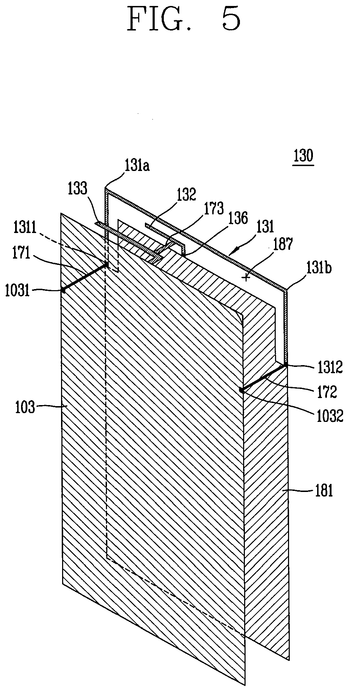

FIG. 5 is a view schematically illustrating a configuration of the antenna module to which a third connection member is further added, according to the present invention.

As shown in FIG. 5, according to an embodiment of the present invention, a third connection member 173, which connects the second conductive member 132 to the third conductive member 133, may be added for an impedance matching at the fourth loop (L4).

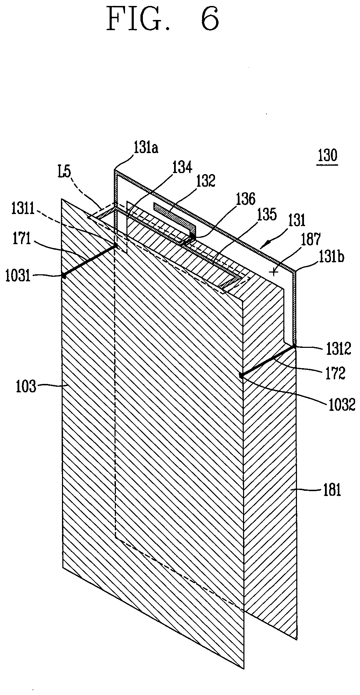

FIG. 6 is a view schematically illustrating a configuration of the antenna module to which fourth and fifth conductive members are further added.

In FIG. 6, the ground plate 181 and the metal plate 103 are shown, in which the fourth and fifth conductive members 134 and 135 are added to the antenna module shown in FIG. 3 in an attempt to extend a bandwidth of a resonance frequency.

To this end, according to the example of FIG. 6, the fourth conductive member 134 and the fifth conductive member 135 each having one end connected to the feeding portion 136 and another end connected to the metal plate 103 are further provided. The fourth and fifth conductive members 134 and 135 are directly fed by the feeding portion 136, and form a fifth loop (L5) together with part of the metal plate 103. The fourth and fifth conductive members 134 and 135 are provided to enhance an impedance matching at a low band and a high band, respectively.

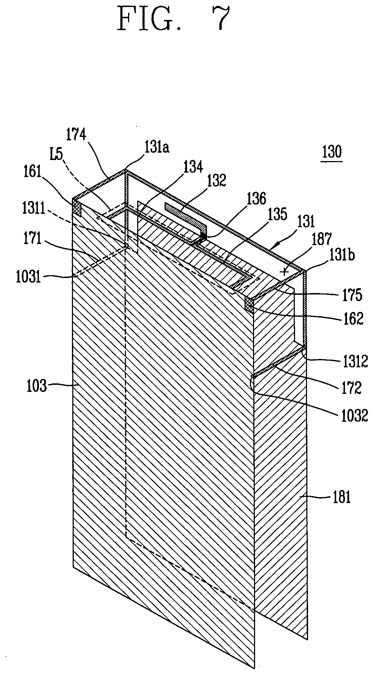

FIG. 7 is a view schematically illustrating a configuration of the antenna module to which first and second switches 161 and 162 are added. As shown in FIG. 7, according to an example, there are provided fourth and fifth connection members 174 and 175 which connect the first conductive member 131 to the metal plate 103. Further, the fourth and fifth connection members 174 and 175 have a first switch 161 and a second switch 162 at each one end thereof. The first switch 161 selectively operates the fourth connection member 174, and the second switch 162 selectively operates the fifth connection member 175.

The fourth and fifth connection members 174 and 175 may be formed at an edge portion of the mobile terminal 100.

When the first switch 161 and the second switch 162 are simultaneously or individually operated, a conductive loop is additionally generated, thereby securing a further resonance frequency band.

In this instance, the first switch 161 is formed at the fourth connection member 174 which connects one point of the first conductive member 131 to one point of the metal plate 103, and the second switch 162 is formed at the fifth connection member 175 which connects one point of the first conductive member 131 to one point of the metal plate 103. Here, the fourth and fifth connection members 174 and 175 are spaced apart from each other and, for instance, as shown in FIG. 7, may be formed at bent portions 131a and 131b of the first conductive member 131, but not limited thereto, and the first and second switches 161 and 162 may be connected to an intermediate point of the first conductive member 131. Furthermore, the fourth and fifth connection members 174 and 175 may be formed at an inner portion where the first and second connection members 171 and 172 are connected to the first conductive member 131.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

As the present features may be embodied in several forms without departing from the characteristics thereof, it should also be understood that the above-described embodiments and examples are not limited by any of the details of the foregoing description, unless Alternatively specified, but rather should be considered broadly within its scope as defined in the appended claims, and therefore all changes and modifications that fall within the metes and bounds of the claims are therefore intended to be embraced by the appended claims.

## Claims

1. An antenna module (130), comprising:
a ground plate (181);
a metal plate (103) spaced apart from the ground plate by a distance such that a surface of the metal plate faces a surface of the ground plate;
a first conductive member (131) spaced apart from an edge of the ground plate by a distance, the first conductive member encompassing the edge;
a feeding part (136) formed on the ground plate;
a second conductive member (132) formed on the ground plate and electrically coupled to the feeding part, wherein the second conductive member electromagnetically feeds the first conductive member and the metal plate; and
a first connection member (171) and a second connection member (172) that electrically couple the ground plate to the metal plate,
**characterized in that** positions at which the first connection (171) member and the second connection member (172) are formed are at end portions of the first conductive member (131),
wherein a third conductive member (133) is formed on the metal plate and spaced apart from the second conductive member by a distance, and the third conductive member is fed by the second conductive member,
wherein the second conductive member and the third conductive member are electrically coupled by a third connection member (173).

2. The antenna module (130) of any one preceding claim, further comprising a fourth conductive member (134) and a fifth conductive member (135), each having a first end connected to the feeding part (136) and a second end connected to the metal plate (103).

3. The antenna module (130) of claim 2, further comprising a first (161) switch and a second switch (162) that are configured to selectively operate the fourth connection member (174) and the fifth connection member (175) to connect the first conductive member (131) to the metal plate (103).

4. The antenna module (130) of claim 3, wherein the fourth connection member (174) and the fifth connection member (175) are provided at an inner side of a region of the first conductive member (131) where the first connection member (171) and the second connection member (172) are connected with the first conductive member (131).

5. The antenna module (130) of any one preceding claim, wherein the ground plate (181) is a printed circuit board.

6. The antenna module (130) of claim 5, wherein the first conductive member (131) is formed on an extension part of the printed circuit board (181).

7. The antenna module (130) of any one preceding claim, wherein the first conductive member (131) is formed on a carrier having a dielectric constant, or formed at an outside of an insulation part formed on an edge of the ground plate (181),
wherein the first conductive member is one of a conductive line, a pogo pin, a c-clip, or an electromagnetic interference, EMI, sheet.

8. A mobile terminal (100), comprising:
a terminal body; and
an antenna module (130) provided within the terminal body, the antenna module being in accordance with any one preceding claim.

9. The mobile terminal (100) of claim 8, wherein the metal plate (103) is a rear cover covering the terminal body.

10. The mobile terminal (100) of claim 8, wherein the fourth conductive member (174) and the fifth conductive member (175) are formed at an inner side of a side surface of the terminal body.

11. The mobile terminal (100) of any one of claims 8 to 10, wherein the ground plate (181) is an intermediate frame provided within the terminal body.

## Patentansprüche

1. Ein Antennenmodul (130), aufweisend:
eine Grundplatte (181);
eine Metallplatte (103), die von der Grundplatte derart um einen Abstand beabstandet ist, dass eine Oberfläche der Metallplatte einer Oberfläche der Grundplatte zugewandt ist;
ein erstes leitendes Element (131), das von einer Kante der Grundplatte um einen Abstand beabstandet ist, wobei das erste leitende Element die Kante umformt;
ein Feed-Teil (136), das an der Grundplatte ausgebildet ist;
ein zweites leitendes Element (132), das an der Grundplatte ausgebildet und mit dem Feed-Teil elektrisch gekoppelt ist, wobei das zweite leitende Element das erste leitende Element und die Metallplatte elektromagnetisch speist; und
ein erstes Verbindungselement (171) und ein zweites Verbindungselement (172), die die Bodenplatte mit der Metallplatte elektrisch koppeln,
**dadurch gekennzeichnet, dass**
Positionen, an denen das erste Verbindungselement (171) und das zweite Verbindungselement (172) ausgebildet sind, an Endabschnitten des ersten leitfähigen Elements (131) sind, wobei
ein drittes leitfähiges Element (133) an der Metallplatte ausgebildet ist und von dem zweiten leitfähigen Element um einen Abstand beabstandet ist, und
das dritte leitfähige Element durch das zweite leitfähige Element gespeist ist, wobei
das zweite leitfähige Element und das dritte leitfähige Element durch ein drittes Verbindungselement (173) elektrisch gekoppelt sind.

2. Das Antennenmodul (130) nach einem der vorhergehenden Ansprüche, ferner aufweisend ein viertes leitfähiges Element (134) und ein fünftes leitfähiges Element (135), welche jeweils ein erstes Ende, das mit dem Feed-Teil (136) verbunden ist, und ein zweites Ende, das mit der Metallplatte (103) verbunden ist, haben.

3. Das Antennenmodul (130) nach Anspruch 2, ferner umfassend einen ersten Schalter (161) und einen zweiten Schalter (162), die dazu konfiguriert sind, selektiv das vierte Verbindungselement (174) und das fünfte Verbindungselement (175) anzusteuern, um das erste leitfähige Element (131) mit der Metallplatte (103) zu verbinden.

4. Das Antennenmodul (130) nach Anspruch 3, wobei das vierte Verbindungselement (174) und das fünfte Verbindungselement (175) an einer Innenseite eines Bereichs des ersten leitfähigen Elements (131) bereitgestellt sind, wo das erste Verbindungselement (171) und das zweite Verbindungselement (172) mit dem ersten leitfähigen Element (131) verbunden sind.

5. Das Antennenmodul (130) nach einem der vorhergehenden Ansprüche, wobei die Grundplatte (181) eine gedruckte Leiterplatte ist.

6. Das Antennenmodul (130) nach Anspruch 5, wobei das erste leitende Element (131) an einer Ausformung der Leiterplatte (181) ausgebildet ist.

7. Das Antennenmodul (130) nach einem der vorhergehenden Ansprüche, wobei das erste leitfähige Element (131) an einem Träger ausgebildet ist, der eine dielektrische Konstante hat, oder an einer Aussenseite eines Isolationsteils ausgebildet ist, das an einer Kante der Grundplatte (181) ausgebildet ist, wobei
das erste leitfähige Element eine leitfähige Leitung, ein Pogo-Pin, ein C-Clip oder eine elektromagnetische Interferenz, EMI, Folie ist.

8. Ein mobiles Endgerät (100), umfassend:
einen Anschlusskörper; und
ein Antennenmodul (130), das innerhalb des Anschlusskörpers bereitgestellt ist, wobei das Antennenmodul gemäß einem der vorhergehenden Ansprüche ausgebildet ist.

9. Das mobile Endgerät (100) nach Anspruch 8, wobei die Metallplatte (103) eine hintere Abdeckung ist, die den Anschlusskörper abdeckt.

10. Das mobile Endgerät (100) nach Anspruch 8, wobei das vierte leitfähige Element (174) und das fünfte leitfähige Element (175) an einer Innenseite einer Seitenfläche des Anschlusskörpers ausgebildet sind.

11. Das mobile Endgerät (100) nach einem der Ansprüche 8 bis 10, wobei die Grundplatte (181) ein Zwischenrahmen ist, der innerhalb des Anschlusskörpers bereitgestellt ist.

## Revendications

1. Module d'antenne (130) comprenant :
une plaque de masse (181) ;
une plaque métallique (103) espacée de la plaque de masse d'une distance telle qu'une surface de la plaque métallique fait face à une surface de la plaque de masse ;
un premier élément conducteur (131) espacé d'un bord de la plaque de masse d'une certaine distance, le premier élément conducteur englobant le bord ;
une partie d'alimentation (136) formée sur la plaque de masse ;
un deuxième élément conducteur (132) formé sur la plaque de masse et électriquement couplé à la partie d'alimentation, dans lequel le deuxième élément conducteur alimente électromagnétiquement le premier élément conducteur et la plaque métallique ; et
un premier élément de connexion (171) et un deuxième élément de connexion (172) qui couplent électriquement la plaque de masse à la plaque métallique, **caractérisé en ce que**
des positions au niveau desquelles le premier élément de connexion (171) et le deuxième élément de connexion (172) sont formés se trouvent au niveau de parties d'extrémité du premier élément conducteur (131),
dans lequel un troisième élément conducteur (133) est formé sur la plaque métallique et espacé du deuxième élément conducteur d'une certaine distance, et le troisième élément conducteur est alimenté par le deuxième élément conducteur,
dans lequel le deuxième élément conducteur et le troisième élément conducteur sont électriquement couplés par un troisième élément de connexion (173).

2. Module d'antenne (130) selon l'une quelconque des revendications précédentes, comprenant en outre un quatrième élément conducteur (134) et un cinquième élément conducteur (135), ayant chacun une première extrémité connectée à la partie d'alimentation (136) et une deuxième extrémité connectée à la plaque métallique (103).

3. Module d'antenne (130) selon la revendication 2, comprenant en outre un premier commutateur (161) et un deuxième commutateur (162) qui sont configurés pour actionner sélectivement le quatrième élément de connexion (174) et le cinquième élément de connexion (175) pour connecter le premier élément conducteur (131) à la plaque métallique (103).

4. Module d'antenne (130) selon la revendication 3, dans lequel le quatrième élément de connexion (174) et le cinquième élément de connexion (175) sont prévus au niveau d'un côté interne d'une région du premier élément conducteur (131) où le premier élément de connexion (171) et le deuxième élément de connexion (172) sont connectés au premier élément conducteur (131).

5. Module d'antenne (130) selon l'une quelconque des revendications précédentes, dans lequel la plaque de masse (181) est une carte de circuit imprimé.

6. Module d'antenne selon la revendication 5, dans lequel le premier élément conducteur (131) est formé sur une partie d'extension de la carte de circuit imprimé (181).

7. Module d'antenne (130) de l'une quelconque des revendications précédentes, dans lequel le premier élément conducteur (131) est formé sur un support présentant une constante diélectrique, ou formé à l'extérieur d'une partie d'isolation formée sur un bord de la plaque de masse (181),
dans lequel le premier élément conducteur est l'un parmi une ligne conductrice, une broche pogo, une pince en c, ou une feuille d'interférence électromagnétique, EMI.

8. Terminal mobile (100), comprenant :
un corps de terminal ; et
un module d'antenne (130) prévu à l'intérieur du corps de terminal, le module d'antenne étant en conformité avec l'une quelconque des revendications précédentes.

9. Terminal mobile (100) selon la revendication 8, dans lequel la plaque métallique (103) est un couvercle arrière recouvrant le corps de terminal.

10. Terminal mobile (100) selon la revendication 8, dans lequel le quatrième élément conducteur (174) et le cinquième élément conducteur (175) sont formés au niveau d'un côté interne d'une surface latérale du corps de terminal.

11. Terminal mobile (100) selon l'une quelconque des revendications 8 à 10, dans lequel la plaque de masse (181) est un châssis intermédiaire prévu à l'intérieur du corps de terminal.
